Europäisches Patentamt

(19) European Patent Office

Office européen des brevets

(11) Publication number : **0 287 497 B1**

# (12) EUROPEAN PATENT SPECIFICATION

(45) Date of publication of patent specification :
**27.05.92 Bulletin 92/22**

(51) Int. Cl.$^5$ : **B60C 15/06**

(21) Application number : **88630064.9**

(22) Date of filing : **11.04.88**

(54) A pneumatic tire.

(30) Priority : **17.04.87 EP 87630070**
**15.02.88 EP 88102170**

(43) Date of publication of application :
**19.10.88 Bulletin 88/42**

(45) Publication of the grant of the patent :
**27.05.92 Bulletin 92/22**

(84) Designated Contracting States :
**DE FR GB IT**

(56) References cited :
EP-A- 0 206 679
EP-A- 0 221 834
DE-A- 1 964 575
FR-A- 1 471 105
GB-A- 2 000 732

(73) Proprietor : **THE GOODYEAR TIRE & RUBBER COMPANY**
**1144 East Market Street**
**Akron, Ohio 44316-0001 (US)**

(72) Inventor : **Alie, Jean-Claude**
**113B Chemin de Musy**
**B-6650 Bastogne (BE)**
Inventor : **Geisen, Romain**
**20 rue du Kiem**
**L-8030 Strassen (LU)**
Inventor : **Lamock, Andre**
**82 rue du Centre**
**B-6633 Fauvillers (BE)**
Inventor : **Villamizar, William**
**4 rue de l'Alzette**
**L-7420 Cruchten (LU)**

(74) Representative : **Leitz, Paul**
**Goodyear Technical Center-Luxembourg**
**Patent-Department**
**L-7750 Colmar-Berg (LU)**

## Description

This invention relates generally to pneumatic - tires and in particular to pneumatic tires for heavy - duty use comprising a radial carcass and two bead regions each reinforced by a bead core whereby the carcass comprises two sets of at least two textile - plies each, anchored around the bead core, the plies of the first set being wrapped around the bead core from the inside to the outside of the tire and the plies of the second set being wrapped around the bead core from the outside to the inside of the tire and whereby the bead regions each comprise an axially inner and an axially outer textile reinforcing layer and a rubber apex strip of a substantially triangular cross-section extending radially outwardly from the bead core, the axially inner and outer textile reinforcing layers being respectfully disposed axially inside and outside of the first and second sets of carcass plies along the radial extent of the rubber apex strip. A tire according to the preamble of claim 1 is disclosed e.g. in FR-A-1471105.

Radial carcass tires for heavy duty use are frequently used under heavy load conditions which place the components within a tire under severe stress. The bead regions of such tires are particularly subject to large deformations caused by flexing of the sidewalls which can produce sheer stresses between the carcass plies, buildup of heat in the tire and subsequent separation failure.

The applicants have discovered a tire construction with particularly durable bead regions which reduces the sheer stresses between the carcass plies. The pneumatic tire of the present invention is characterised in that the first and second sets of carcass plies are separated from one another only below a separation point at the apex of the rubber apex strip, in that the height of the radially outermost end of the rubber apex strip is located between 0.15 and 0.2 times the height of the tire cross-section, in that the ply endings of the first set of carcass plies are located at a height which is lower than the height of the radially outermost end of the rubber apex strip, and in that the height of the outermost edge of the axially outer textile reinforcing layer is located between 0.2 and 0.35 times the height of the tire cross-section.

The construction according to the present invention provides a separation point between the first and second set of carcass plies which is situated outside the flexing zone of the tire. The separation point between the first and second set of carcass plies is determined by the height of the radially outermost end of the rubber apex strip. Since the first and second set of carcass plies follow the same path in the flexing zone and separate from one another only in the area protected by the axially inner and axially outer textile reinforcing layers, the sheer stresses between the first and second set of carcass plies are reduced.

The axially inner and axially outer textile reinforcing layers are disposed such that the required stiffness gradient in the bead region is retained, the stiffness decreasing gradually radially outwardly from the radially outermost end of the rubber apex strip into the flexing zone of the tire.

In a preferred embodiment of the invention, the axially inner and axially outer textile reinforcing layers comprise square woven fabric which help towards reducing the ply waviness of both the reinforcing - layers and the carcass plies.

The textile reinforcing layers are generally composed of one or more textile plies having parallel - cords making substantially the same angle with the mid-circumferential plane of the tire. During the first stage of the tire building process, these plies are typically applied onto the carcass band on a flat building drum, and subsequently during the tire shaping - stage, the building drum is made to expand to conform the tire casing to its final toroidal shape. During this expansion, the textile reinforcing plies in the - bead region undergo a displacement generally referred to as pantographing. However, depending on the construction of the tire and on the building equipment that is used, such pantographing may not be uniform. The non-uniform displacement of the reinforcing plies may in turn, affect the uniform spacing between the carcass plies in the bead area thereby resulting in what is generally referred to as ply waviness.

This waviness of the carcass plies in the bead region is known to contribute towards separation failures in the bead area of the tire.

The tire construction of the preferred embodiment of the present invention, that makes use of axially inner and axially outer textile reinforcing layers comprising a square woven fabric, reduces the waviness of the reinforcing layers and the carcass plies and therefore improves the performance of the tire.

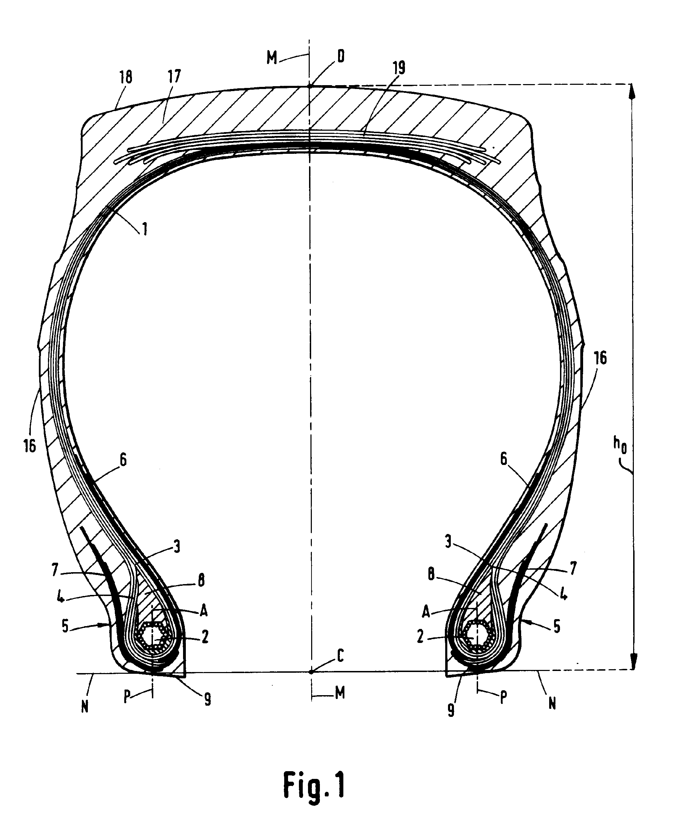

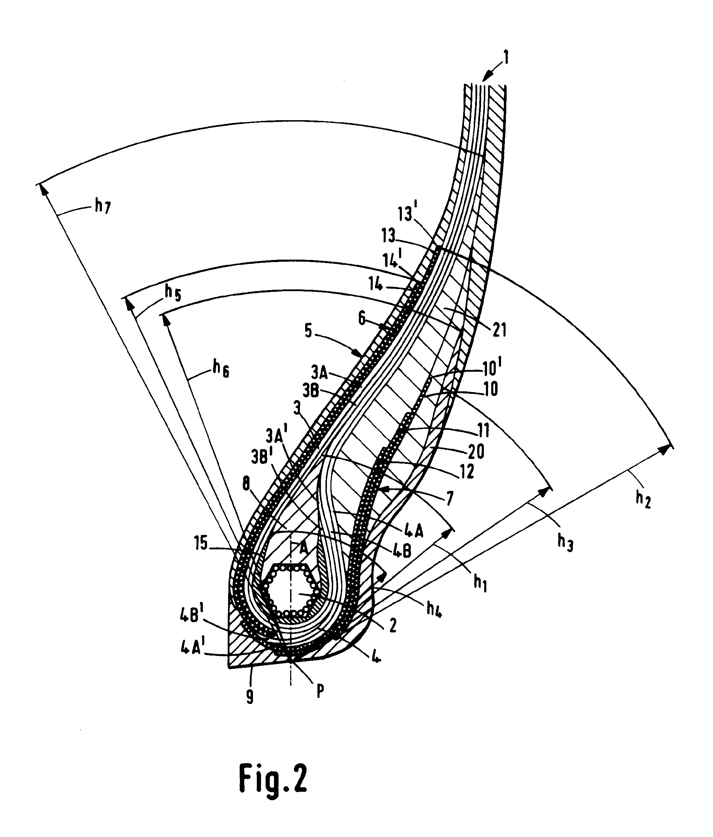

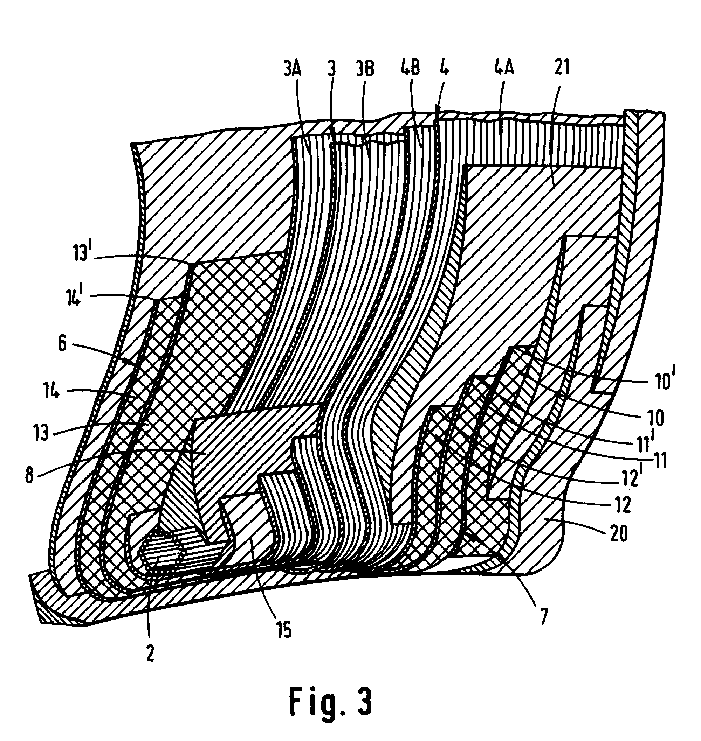

The invention will now be described with reference to the accompanying drawings in which: Fig. 1 is a radial cross-sectional view of the tire of the present invention; and Fig. 2 is an enlarged radial cross-sectional view of a bead region of the tire of Fig. 1. Fig. 3 is a schematic side view of a bead region of the preferred embodiment of a tire according to the present invention.

Throughout the specification the terms "axial" and "axially" relate to displacements along the axis of rotation of the tire, and the terms "radial" and "radially" refer to displacements in a plane perpendicular to the axis of rotation of the tire. The terms "axially inner" and "axially outer" refer to axial positions relative to the mid-circumferential plane M-M. The mid-circumferential plane M-M is a plane normal to the axis of rotation and which is located midway between the bead cores 2.

With reference to Fig.1 and Fig.2, there is illustrated a cross-section through a radial carcass tire for heavy duty use for mounting on a flat base wheel rim. The tire comprises a pair of annular bead regions 5 for engaging with the bead seats and flanges of a wheel rim. Both bead regions 5 are of identical construction and therefore only one of the bead regions 5 will be described. The bead region 5 comprises a substantially inextensible annular bead core 2, an axially inner 6 and an axially outer 7 textile reinforcing layer and a rubber apex strip 8 of a substantially triangular cross-section extending radially outwardly from the bead core 2. The bead core 2 as shown in the embodiment of figures 1 and 2 consists of metal cords which are disposed in a ring having a generally hexagonal cross-section. The invention is not limited to the use of such bead cores and is equally applicable to bead cores of a different construction and cross-section.

A sidewall 16 extends radially outwardly from each bead region 5 into a crown region 17 of the tire. The crown region 17 has a ground contacting tread 18 extending circumferentially thereabout. The tire is further reinforced in the crown region 17 by an annular belt structure 19 disposed radially outwardly of the carcass 1.

The carcass 1 may comprise two sets of at least two textile plies each, extending between the bead cores 2, the plies 3A,3B of the first set 3 being wrapped around the bead core 2 from the inside to the outside of the tire and the plies 4A,4B of the second set 4 being wrapped around the bead core 2 from the outside to the inside of the tire. As used herein, the "inside" of a tire is a surface that defines an air chamber, and the "outside" is the opposing surface.

The material for the textile plies of the carcass may be selected from one or more of the conventional materials that are used in tires, such as polyester, nylon, rayon, etc. Applicants have found that polyester is a particularly suitable material for the first 3 and second 4 sets of carcass plies.

In the embodiment shown, the carcass plies 4A,4B of the second set 4 are disposed axially outwardly of the carcass plies 3A,3B of the first set 3 and the end portions of the carcass plies 4A,4B of the second set 4 enclose the end portions of the carcass plies 3A,3B of the first set 3.

Referring now more particularly to figure 2, it can be seen that the ply endings 3A',3B' of the first set 3 of carcass plies are located at a height which is lower than the height $h_1$ of the radially outermost end of the rubber apex strip 8, while the ply endings 4A',4B' of the second set 4 of carcass plies are located at a height which is lower than the height of the radially innermost edge of the bead core 2.

Throughout this specification, by "height" of a structural component is meant the straight line distance of the component from a reference point P - which is located at the intersection of (a) a plane A which is perpendicular to the tire's axis of rotation and passes through the center of the respective bead - core 2 and (b) the radially inner surface 9 of the bead region 5.

The height of the tire cross-section $h_0$, as shown on figure 1, is measured as the radial distance from a point C, which is located at the intersection of a mid-circumferential plane M-M and a plane N-N which connects the two reference points P, to a point D which is the radially outermost point of the tread surface on the mid-circumferential plane M-M.

The lower portion of the sidewall is reinforced and rigidified by axially inner 6 and axially outer 7 - textile reinforcing layers. The axially inner textile reinforcing layer 6 comprises at least two plies 13,14. In the embodiment shown, the two plies 13,14 are - staggered and are arranged to terminate successively radially outwardly further as each ply 13,14 is located axially closer to the carcass 1. The invention, however, is not limited to this configuration and equally applies to tires in which the reverse arrangement of the plies 13,14 is used. In the reverse arrangement of the plies 13,14, the plies 13,14 terminate successively radially outwardly further as each ply 13,14 is located axially further away from the carcass 1. The height $h_2$ of the radially outermost edge of the axially inner textile reinforcing layer 6 is located between 0.25 and 0.45 times the height $h_0$ of the tire cross-section.

The axially outer textile reinforcing layer 7 consists of at least two plies. In the embodiment shown there is illustrated an axially outer textile reinforcing layer 7 comprising three plies 10,11,12 which are staggered and are arranged to terminate successively radially outwardly further as each ply 10,11,12 is located further away from the carcass 1. Similarly to what has been described above in connection with the axially inner textile reinforcing layer, the invention is not limited to this configuration of the plies 10,11,12 and equally applies to tires in which the reverse arrangement of the plies 10,11,12 is used. As outlined in the introduction to the specification, it is essential that the textile reinforcing layer plies are arranged such that a gradual decrease of the stiffness of the tire from the bead core towards the mid-sidewall is accomplished. This is achieved by the staggering of the plies as described above, combined with the fact that the height $h_5$ of the radially outermost edge 14' of the ply 14 of the axially inner textile reinforcing layer 6 that terminates radially closest to the axis of the tire is greater than the height $h_3$ of the radially outermost edge 10' of the ply 10 of the axially outer textile reinforcing layer 7 that terminates radially outwardly furthest from the axis of the tire. The height $h_3$ of the radially outermost edge of the axially outer textile reinforcing layer 7 is located between 0.2 and 0.35 times, the height $h_0$ of the tire cross-section.

The bead region 5 of the tire further comprises an apex strip 8 of a generally triangular cross section extending radially outwardly from the bead core towards the sidewall of the tire. More specifically, the height $h_1$ of the radially outermost end of the rubber apex strip 8 is located between 0.15 and 0.2 times the height $h_0$ of the tire cross-section. The rubber apex strip 8 generally consists of a rubber compound with a Shore A hardness in the range of between 70° and 90°.

The bead region 5 further comprises an additional rubber reinforcing layer 15, generally referred to in the tire art as a flipper, which is wrapped partially around the bead core 2 and is located between the bead core 2 and the first set of carcass plies 3. The radially outermost edge of the rubber reinforcing layer 15 is located at a height $h_4$ which is less than 0.15 times the height $h_0$ of the tire cross-section.

As illustrated in figure 2 the bead region 5 of the tire further comprises an additional rubber layer 20, generally referred to as chafer, which is located on the axially outer side of the bead region 5, generally referred to as the heel of the bead region 5. This rubber layer 20, which preferably consists of a compound having a Shore A hardness in the range of between 70° and 90°, increases the rigidity of this portion of the bead and protects it from the chafing action that might take place between the heel of the bead region 5 and the flange of the rim upon which the tire is mounted. In a preferred embodiment of the invention, the rubber reinforcing layer 20 extends from the reference point P to a height $h_6$ which is located between the height $h_5$ of the radially outermost edge 14' of the ply 14 of the axially inner textile reinforcing layer 6 that terminates radially closest to the axis of the tire and the height $h_3$ of the radially outermost edge 10' of the ply 10 of the axially outer textile reinforcing layer 7 that terminates radially outwardly furthest from the axis of the tire. This disposition of the rubber layer 20 further enhances the stiffness gradient in the lower portion of the sidewall of the tire.

There is disposed in the bead region 5 an additional rubber strip 21 which is located adjacent to the rubber apex strip 8 and interposed between the second set 4 of carcass plies and the rubber reinforcing layer 20, and which extends radially outwardly to a height $h_7$ which is smaller than 0.5 times the height $h_0$ of the tire cross-section. This rubber strip 21 preferably has a Shore A hardness in the range of between 55° and 65°.

The present invention has been described with reference to a carcass comprising two sets of two textile plies each. The invention is not limited to such a carcass and is equally applicable to a carcass comprising two sets of textile plies comprised of more than two plies each. It is well known in the tire art that the number of plies that are used as carcass plies - depends upon the size of a tire and the load that the tire must be capable of carrying.

Similarly the number of plies that comprise the inner and outer textile reinforcing layers is dependent on the size and load capacity of the tire.

Figure 3 shows a schematic side view of a bead region of the preferred embodiment of a tire according to the present invention. In this preferred embodiment the axially inner 6 and axially outer 7 textile reinforcing layers are composed of a square woven fabric, the angle which the cords of the square woven fabric make with the mid-circumferential plane M-M being in the range of 30 degrees and 60 degrees. Preferably the angle is 45 degrees.

"Square woven fabric" as described throughout the present specification, refers to a plurality of textile cords that are interwoven or knit such that a first portion of the textile cords extend parallel to one another in a first direction while the remainder of the textile cords extend parallel to one another in a second direction that is substantially perpendicular to the first direction. As used herein, and in the claims, "interwoven" refers to fabric produced by interlacing two cords so that they cross each other at right angles, and "knit" refers to fabric produced by interlocking a series of loops of one or more cords. As used herein, and in the claims, "textile cords" refers to any fiber, filament or yarn of the type used for reinforcing tires. The textile cords of the square woven fabric used in practicing this invention are preferably nylon, but may be polyester or any other suitable material selected in accordance with good engineering practice.

## Claims

1. A pneumatic tire for heavy duty use comprising a radial carcass (1) and two bead regions (5) each reinforced by a bead core (2), whereby the carcass comprises two sets (3, 4) of at least two textile carcass plies each, anchored around the bead core (2), the carcass plies (3A,3B) of the first set (3) being wrapped around the bead core (2) from the inside towards the outside of the tire and the carcass plies (4A,4B) of the second set (4) being wrapped around the bead core (2) from the outside towards the inside of the tire and whereby the bead regions (5) each comprise an axially inner (6) and an axially outer (7) textile reinforcing layer and a rubber apex strip (8) of a substantially triangular cross-section extending radially outwardly from the bead tore (2), the axially inner (6) and outer (7) textile reinforcing layer being respectfully disposed axially inside and outside of the first (3) and second sets (4) of carcass plies along the radial extent of the rubber apex strip (8), the height ($h_2$) of the radially outermost edge of the axially inner textile reinforcing layer (6) being higher than the height ($h_3$)

of the radially outermost edge of the axially outer textile reinforcing layer (7), the height ($h_2$) of the radially outermost edge (13') of the axially inner textile reinforcing layer (6) being located between 0,2 and 0,5 times, preferably between 0.25 and 0.45 times, the height ($h_0$) of the tire cross-section characterized in that the first (3) and second (4) sets of carcass plies are separated from one another only below a separation point at the apex of the rubber apex strip (8), in that the height ($h_1$) of the radially outermost end of the rubber apex strip (8) is located between 0.15 and 0.2 times the height ($h_0$) of the tire cross-section; in that the ply endings (3A',3B') of the first set of carcass plies (3) are located at a height which is lower than the height ($h_1$) of the radially outermost end of the rubber apex strip (8); and in that the height ($h_3$) of the radially outermost edge (10') of the axially outer textile reinforcing layer (7) is located between 0.2 and 0.35 times the height ($h_0$) of the tire cross-section.

2. A pneumatic tire for heavy duty use according to claim 1, characterized in that the axially outer textile reinforcing layer (7) comprises at least two outer plies (10,11,12), said outer plies (10,11,12) being staggered and being arranged to terminate successively radially outwardly further as each said outer ply (10,11,12) is located axially further away from the carcass (1).

3. A pneumatic tire for heavy duty use according to claim 1, characterized in that the axially outer textile reinforcing layer (7) comprises at least two outer plies, said outer plies being staggered and being arranged to terminate successively radially outwardly further as each said outer ply is located axially closer to the carcass (1).

4. A pneumatic tire for heavy duty use according to claim 2 or 3, characterized in that the axially inner textile reinforcing layer (6) comprises at least two inner plies (13,14), said inner plies (13,14) being staggered and being arranged to terminate successively radially outwardly further as each said inner (13,14) is located axially closer to the carcass (1).

5. A pneumatic tire for heavy duty use according to claim 2 or 3, characterized in that the axially inner textile reinforcing layer (6) comprises at least two inner plies, said inner plies being staggered and being arranged to terminate successively radially outwardly further as each said inner ply is located axially further away from the carcass (1).

6. A pneumatic tire for heavy duty use according to claim 4 or 5, characterized in that the height ($h_5$) of the radially outermost edge (14') of the inner ply (14) of the axially inner textile reinforcing layer (6) that terminates radially closest to the axis of the tire is greater than the height ($h_3$) of the radially outermost edge (10') of the outer ply (10) of the axially outer textile reinforcing layer (7) that terminates radially outwardly furthest from the axis of the tire.

7. A pneumatic tire for heavy duty use according to claim 6, characterized in that it comprises an additional rubber reinforcing layer (15) which is wrapped around the bead core (2) and is located between the bead core (2) and the first set of carcass plies (3), the height ($h_4$) of the radially outermost edges of the rubber reinforcing layer (15) being less than 0.15 times the height ($h_0$) of the tire cross-section.

8. A pneumatic tire for heavy duty use according to claim 7, characterized in that it comprises a further rubber layer (20) of a Shore A hardness in the range of between 70° and 90° which is located on the axially outermost side of the bead region (5) and extends to a height ($h_6$) which is between the height ($h_5$) of the radially outermost edge (14') of the inner ply (14) of the axially inner textile reinforcing layer (6) that terminates radially closest to the axis of the tire and the height ($h_3$) of the radially outermost edge (10') of the outer ply (10) of the axially outer textile reinforcing layer (7) that terminates radially outwardly furthest from the axis of the tire.

9. A pneumatic tire for heavy duty use according to any of the preceding claims, characterized in that the textile plies of the carcass (1) are comprised of polyester cords.

10. A pneumatic tire for heavy duty use according to any of the preceding claims characterized in that the axially inner (6) and axially outer (7) textile reinforcing layers (6,7) are comprised of nylon cords.

11. A pneumatic tire for heavy duty use according to any of the preceding claims, characterized in that the axially inner (6) and axially outer (7) textile reinforcing layers (6, 7) are composed of a square woven fabric, the angle which the cords of the square woven fabric make with the mid-circumferential plane M-M being in the range of 30 degrees to 60 degrees.

12. A pneumatic tire for heavy duty use according to claim 11, characterized in that the angle which the cords of the square woven fabric make with the mid-circumferential plane is 45 degrees.

13. A pneumatic tire for heavy duty use according to claim 11 or 12 characterized in that the square woven fabric is knit.

14. A pneumatic tire for heavy duty use according to claim 11 or 12 characterized in that the square woven fabric comprises cords that are interwoven.

**Patentansprüche**

1. Luftreifen für hohe Schwerlastbetrieb, mit einer Radialkarkasse (1) und zwei Wulstbereichen (5), die jeweils durch einen Wulstkern (2) verstärkt sind, wobei die karkasse zwei Sätze (3, 4) von wenigstens zwei Textil-Karkassenlagen umfaßt, von denen jede um den Wulstkern (2) verankert ist, die Karkassenlagen (3A, 3B) des ersten Satzes (3) um den Wulstkern (2) von der Innen zur Außenseite des Rei-

fens und die Karkassenlagen (4A, 4B) des zweiten Satzes (4) um den Wulstkern (2) von der Außen- zur Innenseite des Reifens gewickelt sind und wobei jeder der Wulstbereiche (5) eine axial innere (6) und eine axial äußere (7) Textilverstärkungslage und ein Kautschuk- bzw. Gummi-Kernreiterstreifen bzw. -Spitzenstreifen (8) von im wesentlichen dreieckigem Querschnitt, der sich radial außerhalb des Wulstkern (2) erstreckt, die axial innere (6) und äußere (7) Textilverstärkungslage axial innerhalb und außerhalb des ersten (3) und zweiten (4) Satzes der Karkassenlagen entlang der radialen Ausdehnung des Gummi-Kernreiter streifens (8) mit genügendem Abstand angeordnet sind, die Höhe ($h_2$) der radial äußersten Kante der axial inneren Textilverstärkungslage (6) höher als die Höhe ($h_3$) der radial äußersten Kante der axial äußeren Textilverstärkungslage (7) ist, die Höhe ($h_2$) der radial äußersten Kante (13') der axial inneren textil verstärkten Lage (6) zwischen 0,2 und 0,5 Mal, vorzugsweise zwischen 0,25 und 0,45 Mal der Höhe ($h_0$) des Reifenquerschnitts angeordnet ist, dadurch gekennzeichnet, daß der erste (3) und zweite (4) Satz von Karkassenlagen nur unterhalb einer Ablösungsstelle bzw. Trennstelle am Scheitelpunkt des Gummi-Kernreiterstreifens (8) voneinander getrennt sind, daß die Höhe ($h_1$) des radial äußersten Endes des Gummi-Kernreiterstreifens (8) zwischen 0,15 und 0,2 Mal der Höhe ($h_0$) des Reifenquerschnitts angeordnet ist; daß die Lagenenden (3A', 3B') des ersten Satzes der Karkassenlagen (3) in einer Höhe, die niedriger als die Höhe ($h_1$) des radial äußersten Endes des Gummi-Kernreiter- Streifens (8) angeordnet ist; und daß die Höhe ($h_3$) der radial äußersten Kante (10') der axial äußeren Textilverstärkungslage (7) zwischen 0,2 und 0,35 Mal der Höhe ($h_0$) des Reifenquerschnitts angeordnet ist.

2. Luftreifen für Schwerlastbetrieb nach Anspruch 1, dadurch gekennzeichnet, daß die axial äußere Textilverstärkungs lage (7) wenigstens zwei äußere Lagen (10, 11, 12) umfaßt, wobei die äußeren Lagen (10, 11, 12) derart gegeneinander versetzt und angeordnet sind, daß sie aufeinanderfolgend radial außerhalb um so weiter enden wie jede äußere Lage (10, 11, 12) axial weiter entfernt von der Karkasse (1) gelegen ist.

3. Luftreifen für Schwerlastbetrieb nach Anspruch 1, dadurch gekennzeichnet, daß die axial äußere Textilverstärkungs lage (7) wenigstens zwei äußere Lagen umfaßt, wobei die äußeren Lagen derart gegeneinander versetzt und angeordnet sind, daß sie aufeinanderfolgend radial außerhalb um so weiter enden wie jede äußere Lage axial näher zur Karkasse (1) gelegen ist.

4. Luftreifen für Schwerlastbetrieb nach Anspruch 2 oder 3, dadurch gekennzeichnet, daß die axial innere Textilver stärkungslage (6) wenigstens zwei innere Lagen (13, 14) umfaßt, wobei die inneren Lagen (13, 14) derart gegeneinander versetzt und angeordnet sind, daß sie aufeinanderfolgend radial außerhalb um so weiter enden wie jede innere Lage (13, 14) axial näher zur Karkasse (1) gelegen ist.

5. Luftreifen für Schwerlastbetrieb nach Anspruch 2 oder 3, dadurch gekennzeichnet, daß die axial innere Textilver stärkungslage (6) wenigstens zwei innere Lagen umfaßt, wobei die inneren Lagen derart gegeneinander versetzt und angeordnet sind, daß sie aufeinanderfolgend radial außerhalb um so weiter enden wie jede innere Lage axial weiter entfernt von der Karkasse (1) gelegen ist.

6. Luftreifen für Schwerlastbetrieb nach Anspruch 4 oder 5, dadurch gekennzeichnet, daß die Höhe ($h_5$) der radial äußersten Kante (14') der inneren Lage (14) der axial inneren Textilverstärkungslage (6), die radial am nächsten der Reifenachse endet, größer als die Höhe ($h_3$) der radial äußersten Kante (10') der äußeren Lage (10) der axial äußeren Textilverstärkungslage (7) ist, die radial außerhalb am weitesten entfernt von der Reifenachse endet.

7. Luftreifen für Schwerlastbetrieb nach Anspruch 6, dadurch gekennzeichnet, daß er eine zusätzliche Kautschuk- bzw. Gummiverstärkungslage (15), die um den Wulstkern (2) gewickelt und zwischen dem Wulstkern (2) und dem ersten Satz Karkassenlagen (3) angeordnet ist, umfaßt, wobei die Höhe ($h_4$) der radial äußersten Kanten der Gummiverstärkungslage (15) weniger als 0,15 Mal der Höhe ($h_0$) des Reifenquerschnitts ist.

8. Luftreifen für Schwerlastbetrieb nach Anspruch 7, dadurch gekennzeichnet, daß er eine weitere Kautschuk- bzw. Gummilage (20) von einer Härte Shore A im Bereich zwischen 70° und 90° umfaßt, die an der axial äußersten Seite des Wulstbereichs (5) angeordnet ist und sich zu einer Höhe ($h_6$) erstreckt, die zwischen der Höhe ($h_5$) der radial äußersten kante (14') der inneren Lage (14) der axial inneren Textilverstärkungslage 6), die radial am nächsten der Reifenachse endet und der Höhe ($h_3$) der radial äußersten Kante (10') der äußeren Lage (10) der radial äußeren Textilverstärkungslage (7) liegt, die radial außerhalb am weitesten entfernt von der Reifenachse endet.

9. Luftreifen für Schwerlastbetrieb nach einem der vorhergehenden Ansprüche, dadurch gekennzeichnet, daß die Textillagen der Karkasse (1) aus Polyesterkorden aufgebaut sind.

10. Luftreifen für Schwerlastbetrieb nach einem der vorhergehenden Ansprüche, dadurch gekennzeichnet, daß die axial innere (6) und die axial äußere (7) Textil verstärkungslagen (6, 7) aus Nylonkorden aufgebaut sind.

11. Luftreifen für Schwerlastbetrieb nach einem der vorhergehenden Ansprüche, dadurch gekennzeichnet, daß die axial innere (6) und axial äußere (7) Textilverstärkungslagen (6, 7) aus einem rechteckig gewebten Gewebe aufgebaut sind, wobei der Winkel, den die Korde des rechteckig gewebten Gewebes mit der Mittenumfangsebene M-M bilden im Bereich von 30° bis 60° liegt.

12. Luftreifen für Schwerlastbetrieb nach Anspruch 11, dadurch gekennzeichnet, daß der Winkel, den die Korde des rechteckig gewebten Gewebes mit der Mittenumfangs ebene bilden 45° ist.

13. Luftreifen für Schwerlastbetrieb nach Anspruch 11 oder 12, dadurch gekennzeichnet, daß das rechteckig gewebte Gewebe gewirkt ist.

14. Luftreifen für Schwerlastbetrieb nach Anspruch 11 oder 12, dadurch gekennzeichnet, daß das rechteckig gewebte Gewebe Korde umfaßt, die untereinander verwirkt sind.

## Revendications

1. Bandage pneumatique destiné à une utilisation pour travaux durs, comprenant une carcasse radiale (1) et deux zones de talons (5), chacune étant renforcée par une tringle de talon (2), dans lequel la carcasse comprend deux jeux (3, 4) d'au moins deux nappes de carcasse en textile chacun, ancrées autour de la tringle de talon (2), les nappes de carcasses (3A, 3B) du premier jeu (3) étant enroulées autour de la tringle de talon (2) depuis l'intérieur vers l'extérieur du bandage pneumatique et les nappes de carcasse (4A, 4B) du second jeu (4) étant enroulées autour de la tringle de talon (2) depuis l'extérieur en direction de l'intérieur du bandage pneumatique, et dans lequel les zones de talons (5) comprennent chacune une couche de renforcement en textile axialement interne (6) et axialement externe (7), ainsi qu'une bande en caoutchouc de bourrage sur tringle (8) ayant une section transversale essentiellement triangulaire et s'étendant radialement à l'extérieur de la tringle de talon (2), les couches de renforcement en textile axialement interne (6) et externe (7) étant respectivement disposées axialement à l'intérieur et à l'extérieur du premier jeu (3) et du second jeu (4) des nappes de carcasse sur l'étendue radiale de la bande en caoutchouc de bourrage sur tringle (8), la hauteur ($h_2$) du bord radialement le plus externe de la couche de renforcement en textile axialement interne (6) étant supérieure à la hauteur ($h_3$) du bord radialement le plus externe de la couche de renforcement en textile axialement externe (7), la hauteur ($h_2$) du bord radialement le plus externe (13') de la couche de renforcement en textile axialement interne (6) correspondant à une valeur entre 0,2 et 0,5 fois, de préférence entre 0,25 et 0,45 fois la hauteur ($h_0$) de la section transversale du bandage pneumatique, **caractérisé en ce que** le premier jeu (3) et le second jeu (4) des nappes de carcasse sont séparés l'un de l'autre uniquement en dessous d'un point de séparation au sommet de la bande en caoutchouc de bourrage sur tringle (8); **en ce que** la hauteur ($h_1$) de l'extrémité radialement la plus externe de la bande en caoutchouc de bourrage sur tringle (8) correspond à une valeur entre 0,15 et 0,2 fois la hauteur ($h_0$) de la section transversale du bandage pneumatique; **en ce que** les terminaisons des nappes (3A', 3B') du premier jeu des nappes de carcasse (3) sont situées à une hauteur qui est inférieure à la hauteur ($h_1$) de l'extrémité radialement la plus externe de la bande en caoutchouc de bourrage sur tringle (8); et **en ce que** la hauteur ($h_3$) du bord radialement le plus externe (10') de la couche de renforcement en textile axialement externe (7), correspond à une valeur entre 0,2 et 0,35 fois la hauteur ($h_0$) de la section transversale du bandage pneumatique.

2. Bandage pneumatique destiné à une utilisation pour travaux durs selon la revendication 1, **caractérisé en ce que** la couche de renforcement en textile axialement externe (7) est constituée par au moins deux nappes externes (10, 11, 12), lesdites nappes externes (10, 11, 12) étant décalées et disposées pour se terminer successivement plus loin radialement vers l'extérieur, dans la mesure où chacune desdites nappes externes (10, 11, 12) est située axialement plus à l'écart de la carcasse (1).

3. Bandage pneumatique destiné à une utilisation pour travaux durs selon la revendication 1, **caractérisé en ce que** la couche de renforcement en textile axialement externe (7) est constituée par au moins deux nappes externes, lesdites nappes externes étant décalées et étant disposées pour se terminer successivement plus loin radialement vers l'extérieur, dans la mesure où chacune desdites nappes externes est située axialement plus près de la carcasse (1).

4. Bandage pneumatique destiné à une utilisation pour travaux durs selon la revendication 2 ou 3, **caractérisé en ce que** la couche de renforcement en textile axialement interne (6) est constituée par au-moins deux nappes internes (13, 14), lesdites nappes internes (13, 14) étant décalées et étant disposées pour se terminer successivement plus loin radialement vers l'extérieur, dans la mesure où chacune desdites nappes internes (13, 14) est située axialement plus près de la carcasse (1).

5. Bandage pneumatique destiné à une utilisation pour travaux durs selon la revendication 2 ou 3, **caractérisé en ce que** la couche de renforcement en textile axialement interne (6) est constituée par au-moins deux nappes internes, lesdites nappes internes étant décalées et étant disposées pour se terminer successivement plus loin radialement vers l'extérieur, dans la mesure où chacune desdites nappes internes est située axialement plus à l'écart de la carcasse (1).

6. Bandage pneumatique destiné à une utilisation pour travaux durs selon la revendication 4 ou 5, **caractérisé en ce que** la hauteur ($h_5$) du bord radialement le plus externe (14') de la nappe interne (14) de la couche de renforcement en textile axialement interne (6) qui se termine radialement le plus près de l'axe du bandage pneumatique, est supérieure à la hauteur ($h_3$) du bord radialement le plus externe (10') de la nappe externe (10) de la couche de renforcement en textile axialement externe (7), qui se termine radialement à l'extérieur le plus loin de l'axe du bandage pneumatique.

7. Bandage pneumatique destiné à une utilisation pour travaux durs selon la revendication 6, **caractérisé en ce qu'**il comprend une couche supplémentaire de renforcement en caoutchouc (15), qui est enroulée autour de la tringle de talon (2) et qui est située entre la tringle de talon (2) et le premier jeu de nappes de carcasse (3), la hauteur ($h_4$) des bords radialement les plus externes de la couche de renforcement en caoutchouc (15) étant inférieure à 0,15 fois la hauteur ($h_0$) de la section transversale du bandage pneumatique.

8. Bandage pneumatique destiné à une utilisation pour travaux durs selon la revendication 7, **caractérisé en ce qu'**il comprend une couche supplémentaire en caoutchouc (20) ayant une dureté Shore A dans le domaine de 70° à 90°, qui est située sur le côté axialement le plus externe de la zone des talons (5) et qui s'étend jusqu'à une hauteur ($h_6$) située entre la hauteur ($h_5$) du bord radialement le plus externe (14') de la nappe interne (14) de la couche de renforcement en textile axialement interne (6), qui se termine radialement le plus près de l'axe du bandage pneumatique et la hauteur ($h_3$) du bord radialement le plus externe (10') de la nappe externe (10) de la couche de renforcement en textile axialement externe (7), qui se termine radialement à l'extérieur le plus loin de l'axe du bandage pneumatique.

9. Bandage pneumatique destiné à une utilisation pour travaux durs selon l'une quelconque des revendications précédentes, **caractérisé en ce que** les nappes en textile de la carcasse (1) sont constituées par des câblés en polyester.

10. Bandage pneumatique destiné à une utilisation pour travaux durs selon l'une quelconque des revendications précédentes, **caractérisé en ce que** les couches de renforcement en textile (6, 7) axialement interne (6) et axialement externe (7) sont constituées par des câblés en nylon.

11. Bandage pneumatique destiné à une utilisation pour travaux durs selon l'une quelconque des revendications précédentes, **caractérisé en ce que** les couches de renforcement en textile (6, 7) axialement interne (6) et axialement externe (7) sont constituées d'un tissu croisé, l'angle que forment les câblés du tissu croisé avec le plan circonférentiel médian M-M se situant dans le domaine de 30° à 60°.

12. Bandage pneumatique destiné à une utilisation pour travaux durs selon la revendication 11, **caractérisé en ce que** l'angle que forment les câblés du tissu croisé avec le plan circonférentiel médian est de 45°.

13. Bandage pneumatique destiné à une utilisation pour travaux durs selon la revendication 11 ou 12, **caractérisé en ce que** le tissu croisé est tricoté.

14. Bandage pneumatique destiné à une utilisation pour travaux durs selon la revendication 11 ou 12, **caractérisé en ce que** le tissu croisé comprend des câblés qui sont entrelacés.

**Fig.1**

**Fig.2**

**Fig. 3**